# FASCICULE DE BREVET EUROPEEN

(11) **EP 1 855 878 B1**
(45) Date de publication et mention de la délivrance du brevet: **31.01.2018**
(21) Numéro de dépôt: 06708600.9
(22) Date de dépôt: 02.03.2006
(51) Int. Cl.: B32B 17/06, C03C 27/12, C09K 21/02, C01B 33/32

(54) **VITRAGE ANTI-FEU**
BRANDSCHUTZVERGLASUNG
FIREPROOF GLAZING

(30) Priorité: 02.03.2005 BE 200500113
(43) Date de publication de la demande: 21.11.2007
(73) Titulaire: AGC Flat Glass Europe SA, 1170 Bruxelles (BE)
(72) Inventeur: GOELFF, Pierre, 6040 Jumet (BE)
(74) Mandataire: Bayot, Daisy
(86) Numéro de dépôt international: PCT/EP2006/060394
(87) Numéro de publication internationale: WO 2006/092426

(56) Documents cités:
- EP-A- 1 431 027
- WO-A-00/50235
- WO-A-99/04970
- WO-A-02/100636
- WO-A-03/064801
- FR-A- 1 551 442
- FR-A- 2 015 166
- FR-A- 2 090 930
- FR-A- 2 607 491
- US-A- 5 565 273
- US-A1- 2003 180 543

## Description

La présente invention concerne les vitrages anti-feu comprenant au moins une couche d'un silicate alcalin hydraté dont l'exposition au feu engendre la formation d'une mousse opaque qui s'oppose à la transmission des radiations et maintient les feuilles de verre auxquelles la ou les couches de silicate alcalin sont associées.

L'utilisation des silicates alcalins hydratés dans la fabrication des vitrages anti-feu s'effectue selon deux modes distincts.

Le premier mode comprend les produits dans lesquels la ou les couches de silicates sont formées à partir de solutions commerciales de ces silicates, solutions auxquelles sont ajoutés des additifs divers qui en améliorent les propriétés et/ou les conditions de mise en oeuvre. Partant de ces solutions les couches sont obtenues en répandant la solution sur un support et en procédant à un séchage plus ou moins prolongé jusqu'à obtention d'une couche solide. La couche de silicate ainsi formée, éventuellement directement sur une feuille de verre, est ensuite incluse dans un ensemble feuilleté entre deux feuilles de verre, dans une opération d'étuvage.

Pour cette première famille de produits les conditions de préparation, et particulièrement celles de séchage sont relativement contraignantes.

La teneur en eau des solutions commerciales de silicates de sodium est fonction du rapport molaire SiO₂/Na₂O dont dépend le caractère plus ou moins "réfractaire" des produits formés. Elle est de l'ordre de 65% en poids pour un rapport molaire de 3,3, et de l'ordre de 45% pour un rapport molaire de 2. Ces solutions industrielles sont ajustées pour maintenir une viscosité adéquate pour leurs utilisateurs. Aux valeurs indiquées ci-dessus, la viscosité se situe à environ 100mPa.s.

Pour des rapports molaires de l'ordre de 3,3 les produits séchés à base de silicate de sodium doivent présenter une teneur en eau limitée d'environ 20 à 25% d'eau. Pour des teneurs en eau plus élevées la tendance est de rendre ces produits moins stables au vieillissement. Dans le temps il est difficile de garantir que ces produits restent parfaitement transparents. Il se forme souvent un voile qui va en s'accentuant au fil du temps.

Le séchage traditionnellement se fait dans des étuves dans lesquelles température, hygrométrie et ventilation doivent être précisément contrôlées en suivant des cycles dont la durée d'autant plus longue que la teneur initiale en eau est plus importante, se compte en dizaines d'heures.

Un deuxième mode concerne les produits dans lesquels la solution de silicate est modifiée par la présence d'additifs soigneusement choisis, de sorte que laissée au repos elle durcit spontanément dans un temps relativement bref. Pour ces produits, la solution avec ses additifs est coulée entre deux feuilles de verre délimitant un espace clos, un joint situé à la périphérie des feuilles de verre les associant de façon étanche.

L'absence de séchage constitue un avantage certain pour ce qui concerne le mode de production. Les produits en question conservent bien évidemment une forte teneur en eau. La présence de cette eau très abondante, dans certaines conditions, peut être moins favorable à la tenue au feu de ces produits. Une proportion d'eau élevée peut conduire à la formation d'une "mousse" très irrégulière nuisible à l'intégrité de la feuille soumise à l'épreuve du feu. Pour maintenir les qualités "mécaniques" de ces produits à l'épreuve au feu il est alors fait usage de vitrages soit trempés soit encore de vitrages feuilletés. Ces solutions accroissent le coût des produits.

Les qualités optiques, notamment au vieillissement, des produits très riches en eau peuvent aussi s'avérer moins satisfaisantes. La teneur en eau est cependant un élément essentiel des produits durcis. Le temps de durcissement est d'autant plus réduit que la teneur en eau est plus faible. En dessous d'un certain seuil, la vitesse de durcissement après mélange des constituants est si élevée que le produit devient très difficile à mettre en oeuvre.

En plus de la difficulté à couler convenablement la solution, celle-ci a tendance à emprisonner des bulles qu'il n'est pas possible d'éliminer ensuite. Il est alors nécessaire de procéder à un dégazage poussé avant d'effectuer la coulée entre les feuilles de verre. Cette opération de dégazage peut conduire à une réduction limitée de la teneur en eau en rien comparable au séchage mis en oeuvre dans le premier mode indiqué ci-dessus.

Les nombreuses propositions d'amélioration des produits à base de silicates alcalins hydratés, aménagent de façon plus ou moins significative les compromis entre la commodité et la rapidité de fabrication d'une part, et les propriétés des produits résultants d'autre part. Ces améliorations portent aussi bien sur les techniques de fabrication que sur les compositions mises en oeuvre.

Au chapitre des techniques, on peut citer l'utilisation d'atmosphère contrôlée au cours du séchage pour éviter notamment la formation de bulles dans le produit au cours de son vieillissement. Dans ce sens l'utilisation d'oxygène à la place de l'air dans les enceintes de séchage est avantageuse. Toujours à propos des techniques, il a été proposé de remplacer le séchage « statique » effectué dans des enceintes dans lesquelles sont entreposées des feuilles de verre revêtues d'une couche de composition de silicate à sécher, par un système « dynamique » dans lequel la composition à sécher est déposée sous forme d'un film sur un convoyeur support, lequel progresse de façon continue dans un four de séchage de type tunnel. Le temps alloué au séchage dans ces conditions est nécessairement plus court que celui du séchage dans des enceintes, et, compte tenu de ce que le temps de séchage croît plus vite que l'épaisseur de la couche, pour une teneur en eau finale déterminée, les couches obtenues dans ces conditions ne peuvent avoir qu'une épaisseur limitée par rapport à celles obtenues en séchage statique.

Les compositions font aussi l'objet de multiples propositions d'amélioration ou d'ajustement aux exigences particulières des produits concernés. Pour obtenir des produits offrant des tenues au feu particulièrement élevées, il a été proposé d'accroître le caractère réfractaire des couches en augmentant le rapport SiO₂/M₂O. Cet accroissement du caractère réfractaire n'est pas nécessairement favorable aux propriétés optiques des vitrages constitués. Il est obtenu par exemple par introduction de silice finement divisée dans la composition initiale.

Traditionnellement aussi, l'adjonction de glycérine ou d'un polyol dans la composition est utilisée pour améliorer les caractéristiques mécaniques des couches intumescentes. En contrepartie, la présence de glycérine intervient de manière négative sur la vitesse de séchage des couches.

Les publications antérieures, qu'il s'agisse de produits séchés ou non, proposent généralement indifféremment l'utilisation de silicates de sodium, potassium ou lithium, ou encore de leurs mélanges. Le plus fréquemment néanmoins, c'est le silicate de sodium qui est utilisé. L'utilisation de silicate de potassium a été proposée pour améliorer la tenue au vieillissement des couches soumises au rayonnement U.V.

D'autres types d'additifs ont encore été proposés, et parmi ceux-ci divers agents tensioactifs qui favorisent le mouillage des substrats avec lesquels la solution de silicate alcalin est en contact.

Les propositions antérieures résultent de compromis variés entre les exigences de toutes sortes qui s'appliquent à ce type de produits. Des solutions alternatives sont cependant nécessaires pour améliorer les conditions de production et/ou les caractéristiques des produits notamment des produits répondant à des conditions d'utilisation bien spécifiques.

Les inventeurs ont cherché, dans le cadre des techniques comprenant le séchage de la couche intumescente, à produire des couches dont la résistance au vieillissement soit améliorée. En particulier les inventeurs se sont efforcés d'éviter la formation d'un voile (haze).

Un autre but des inventeurs a été de proposer des couches intumescentes obtenues par séchage, pour lesquelles la durée de l'étape de séchage soit considérablement réduite sans pour cela remettre en cause les qualités des produits obtenus. En particulier les inventeurs ont recherché des produits présentant un caractère réfractaire prononcé, autrement dit ayant un rapport molaire Si/alcalin relativement élevé.

Ces buts sont atteints en mettant en oeuvre le procédé tel que revendiqué.

Les inventeurs ont ainsi constaté que la stabilité au vieillissement pouvait être améliorée.

Les inventeurs proposent de maintenir un certain ratio de silice ajoutée à celle provenant des solutions de silicates alcalins.La proportion efficace de cette silice additionnelle peut être déterminée au cas par cas. Pour obtenir l'effet recherché, il est apparu avantageux que la proportion de silice introduite sous forme de silice colloïdale soit au moins de 20% de la silice totale et de préférence d'au moins 30% de la silice totale. Cette proportion peut dépasser 50% en particulier pour les rapports SiO₂/M₂O les plus élevés.

Les solutions, suspensions ou dispersions de silice colloïdale du commerce présentent des teneurs pondérales variables en silice. Usuellement cette teneur est comprise entre 30 et 50%, et la teneur en eau respectivement de l'ordre de 70 à 50%. En conséquence les compositions de silicate additionnées de ces suspensions de silice conservent une teneur en eau relativement élevée.

L'addition de silice colloïdale à la solution de silicate de potassium est effectuée progressivement sous agitation jusqu'à obtention d'une solution pratiquement claire. Le mélange peut aussi être filtré pour éliminer toute particule non dissoute.

La substitution du silicate de potassium au silicate de sodium permet par ailleurs la limitation de l'étape de séchage. Cette limitation de l'étape de séchage est telle que la teneur en eau dans le produit final peut être significativement plus importante que dans les techniques antérieures sans compromettre leur résistance au vieillissement. La teneur en eau dans le produit final reste néanmoins inférieure à 55%, et le plus souvent inférieure à 50%. Cette teneur peut être aussi réduite que dans les produits antérieurs, à savoir de l'ordre de 20%, cependant pour bénéficier de la réduction du temps de séchage, la teneur en eau est avantageusement maintenue entre environ 40 et 48%.

Selon l'invention la substitution du silicate de potassium au silicate de sodium n'est pas nécessairement totale. Elle doit cependant être suffisante pour que l'effet sur la réduction de la nécessité du séchage soit significatif. En pratique la proportion K/Na selon l'invention n'est pas inférieure à 4/1. Elle est de préférence de plus de 5/1 et de façon particulièrement préférée de plus de 10/1.

Le silicate alcalin ou, plus précisément, le mélange de silicates alcalins, peut encore comporter une partie silicate de lithium. Dans ce cas la teneur en lithium rapportée à celle des autres alcalins n'est pas supérieure à Li/(K+Na)<10%.

Comme indiqué précédemment, la teneur en eau des solutions de silicates de potassium disponibles dans le commerce est de l'ordre de 65 à 75% pour un rapport molaire SiO₂/K₂O de l'ordre de 3 à 4 ou plus, et peut descendre jusqu'à 45% pour un rapport molaire de l'ordre de 2. Il n'existe pas de solution habituellement commercialisée dont le rapport molaire est supérieur à 4.

Les solutions commerciales sont stables. Elles ne durcissent pas spontanément. Pour amener ces solutions dans les conditions de solidification nécessaires à la constitution des couches intumescentes selon l'invention, il est nécessaire de procéder à leur séchage.

Le caractère réfractaire nécessite un rapport molaire SiO₂/M₂O initial suffisamment élevé. Dans le cadre de l'invention, ce rapport molaire n'est pas inférieur à 3,5 et peut s'élever jusqu'à 10. Avantageusement ce rapport est compris entre 4 et 6.

Partant de solutions de silicate commerciales il s'agit nécessairement de solutions à relativement forte teneur en eau. Même si la solution est enrichie en silice pour atteindre les rapports molaires les plus élevés, ceci est effectué au moyen de suspension a forte proportion d'eau, et globalement la teneur en eau du mélange reste élevée.

L'utilisation des solutions commerciales de silicates ne permet pas d'atteindre les rapports molaires les plus élevés envisagés selon l'invention. L'obtention des rapports molaires très élevés selon l'invention passe par une addition importante de silice colloïdale dans la composition soumise à séchage. Dans la mesure ou il est avantageux de constituer une composition dont la teneur en eau est limitée, le choix de la solution de silicate servant à ces préparations est pour celles dont la teneur en eau est elle même faible, ce qui implique comme indiqué précédemment des rapports molaires SiO₂/M₂O relativement faibles, par exemple de l'ordre de 2 ou moins.

Partant des solutions du commerce, les solutions de silicate à faible rapport molaire sont obtenues, par exemple, par mélange d'une solution de silicate commerciale avec une solution d'hydroxyde de potassium. Pour minimiser la quantité d'hydroxyde de potassium introduite, on part avantageusement des solutions de silicates commerciales présentant les rapports molaires les plus bas.

L'opération de séchage, nécessaire selon l'invention, s'effectue après que la composition liquide à base de silicate de potassium additionnée de la suspension de silice colloïdale ait été coulée sous forme d'un film uniforme sur un support qui peut être constitué de façon traditionnelle par une feuille de verre destinée à faire partie du vitrage final. Le séchage peut aussi être réalisé de façon connue la composition étant déposée en couche mince sur un support flexible constituant un support temporaire dont la couche est séparée après séchage. En variante le support flexible peut être incorporé au vitrage final avec la couche intumescente qu'il supporte pendant l'opération de séchage.

Le séchage de la solution est effectué jusqu'à ramener la teneur en eau à une valeur pour laquelle la couche peut se solidifier. Cette teneur en eau dans la couche dépend de la nature des constituants et en premier des silicates présents dans la composition, mais également de la présence des additifs comme notamment la glycérine. Le séchage n'est pas nécessairement interrompu dès que les conditions de formation d'une couche solide sont réunies.

S'il est avantageux de limiter l'opération de séchage pour des raisons de coût, il est aussi impératif que la teneur en eau finale ne compromette pas la stabilité du produit final. Le choix de la teneur en eau et donc de l'importance du séchage résultent nécessairement de ce compromis entre la stabilité au vieillissement d'une part et de la durée de l'opération de séchage d'autre part. Néanmoins le choix de l'utilisation du silicate de potassium, et celui du rapport SiO₂/K₂O et enfin le fait d'introduire une partie de la silice sous forme additionnelle permet de conserver une bonne stabilité au vieillissement avec des teneurs relativement élevées en eau.

Pour ces raisons, s'il est possible de pousser le séchage des couches jusqu'à des teneurs en eau analogues à celles des couches antérieures, c'est à dire des teneurs qui peuvent être aussi faible que 20% environ, selon l'invention le séchage est limité, et la teneur en eau dans le produit final est maintenue de préférence relativement élevée. Elle est notamment comprise entre 40 et 55% et avantageusement entre 40 et 48%.

Le fait de maintenir la teneur en eau à ces niveaux élevés a pour premier avantage, de limiter le travail de séchage. Autrement dit partant des solutions comportant les additifs choisis, l'obtention des couches selon l'invention par séchage des solutions à base de silicates de potassium est beaucoup plus rapide que dans les procédés antérieurs.

L'obtention de la solidification des couches s'effectue à des teneurs en eau d'autant plus élevées que le rapport molaire SiO₂/M₂O (avec la majorité de potassium indiquée ci-dessus) est également relativement élevé.

Les compositions initiales destinées à la formation des couches intumescentes selon l'invention peuvent encore contenir divers adjuvants traditionnellement utilisés dans ce type de couches.

Il est traditionnel d'introduire des produits de type polyols, notamment de la glycérine ou de l'éthylène-glycol dans les couches de silicates de sodium afin d'améliorer leur plasticité, plasticité qui commande notamment leurs qualités mécaniques. Cette présence s'avère d'autant plus nécessaire que la teneur en eau de ces produits antérieurs est relativement basse. A l'inverse pour les produits obtenus selon l'invention, qui présentent avantageusement des teneurs en eau sensiblement plus importantes, la teneur en ces additifs, lorsque ceux-ci sont présents, peut être nettement moindre. De cette façon on minimise aussi les inconvénients attachés à la présence de ces additifs. En particulier la faible teneur en composés polyols permet encore de faciliter le séchage des couches.

A titre indicatif, lorsque la glycérine est introduite dans la composition de formation des couches intumescentes selon l'invention, la teneur ne dépasse pas 10%, et est le plus souvent inférieure à 5%.

D'autres additifs traditionnels sont constitués par les composés de type TEOS (tétraéthyl-orthosilicate) ou MTEOS (trimethoxy-méthyl-silane). Ces composés sont introduits dans les couches notamment pour en améliorer les propriétés mécaniques. Leur introduction conduit à des teneurs qui ne dépassent pas 3% en poids de la couche.

Il est encore connu d'introduire des composés aminés, et notamment l'urée, qui améliorent la formation de mousses homogènes lors de l'expansion sous l'effet de la chaleur. Selon l'invention les composés aminés de préférence n'excèdent pas 2% en poids de la couche. D'autres composés aminés tels que le TMAH (tétraméthyl amine hydroxyde) ou un sel de celui-ci peuvent améliorer le comportement au vieillissement (haze).

Par ailleurs pour faciliter le contact de la couche intumescente avec le substrat sur lequel elle est déposée pour effectuer le séchage, des agents tensioactifs sont fréquemment introduits dans les compositions initiales.

L'invention est décrite de façon détaillée dans la suite de la description et des exemples, en faisant aussi référence aux figures jointes qui représentent :

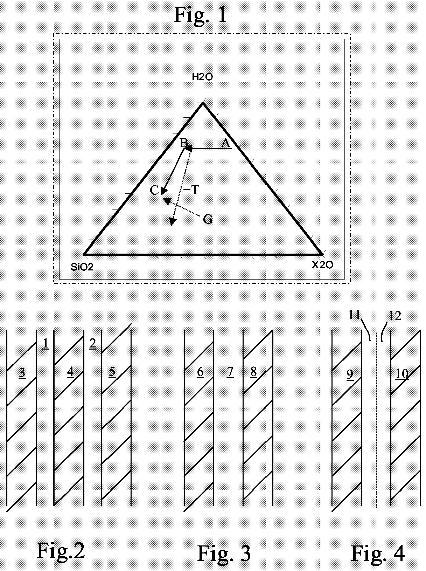

- figure 1, un diagramme ternaire montrant schématiquement les étapes de formation d'une couche intumescente à partir des constituants initiaux; Il faut noter que les concentrations exprimées sur les figure 1 en K2O, SiO2 et H2O sont purement apparentes et ne représentent pas nécessairement les espèces en présence. La figure 1 donne simplement un cheminement apparent ; les concentrations apparentes de chaque point figuré forment simplement un repère qui serait par exemple celui des mesures que l'on obtiendrait par l'analyse par des méthodes classiques de chimie (chimie de table, analyse par absorption atomique...)
- figure 2, un vitrage traditionnel incluant une couche intumescente traditionnelle;
- figure 3, un vitrage de propriétés analogues à celles du vitrage de la figure 2, avec une couche intumescente selon l'invention;
- la figure 4, un vitrage obtenu selon un mode d'assemblage comportant deux couches intumescentes accolées.

Le diagramme de la figure 1 représente le mode de formation des couches intumescentes suivant les processus antérieurs et selon l'invention. Le cheminement est représenté sur le diagramme ternaire des constituants principaux, à savoir l'eau, la silice et les oxydes alcalins.

Le mode traditionnel de formation par séchage à partir d'une solution de silicate de sodium est schématisé sur ce diagramme par la flèche en trait pointillé (T). Partant d'une solution de silicate dont la teneur en eau est d'environ 65% et le rapport SiO₂/Na₂O de l'ordre de 3,5, le séchage effectué, représenté par la flèche ramène la teneur en eau aux environs de 20% pour obtenir un produit dont le vieillissement n'entraîne pas la formation d'un voile.

Dans ce premier mode la réduction importante de la teneur en eau est une opération qui se déroule sur plusieurs dizaine d'heures. Traditionnellement ce séchage s'effectue par exemple en 36 heures. Selon les processus suivis, cette durée peut être écourtée mais dans le mode consistant à effectuer le séchage directement sur la feuille de verre, avec des épaisseurs de couches de l'ordre de 1 à 1,5mm, il est difficile de réduire le temps de séchage à moins de 24 heures si l'on s'efforce d'obtenir un produit sans défaut.

Le cas échéant le séchage peut être écourté par exemple en préchauffant la solution, ou encore en sortant de l'étuve les feuilles avant qu'elles ne soient ramenées à la température ambiante. Ces procédures nécessitent cependant des installations dans lesquelles des mesures spécifiques de sécurité sont nécessaires engendrant des coûts d'investissement supplémentaires.

En suivant l'enseignement de l'invention, représenté par les traits pleins (A,B,C), partant par exemple d'une solution de silicate de potassium présentant à l'origine une teneur en eau qui peut être élevée(A), on procède à l'addition d'une suspension de silice. La composition stable formée (B) est séchée, et le séchage peut être interrompu pour des teneurs en eau (C) plus importantes que dans le schéma précédent sans que la résistance au vieillissement soit amoindrie.

Sur le même diagramme est porté le schéma de production suivi lorsqu'une composition qui durcit spontanément est utilisée (G). Dans ce cas la teneur en eau de la composition reste pratiquement inchangée au cours du durcissement. La transformation en une masse coulable qui se solidifie sans séchage est obtenue par addition, par exemple, de silice colloïdale. Sur le diagramme cette addition est représentée par la flèche dirigée de droite à gauche.

Les techniques d'obtention selon l'invention diffèrent profondément des techniques antérieures comportant un durcissement spontané. Elles diffèrent dans les constituants de départ. Elles diffèrent aussi dans les étapes du procédé d'obtention. Elles diffèrent également dans les propriétés des produits obtenus.

Dans les compositions qui durcissent sans séchage, la solution est coulée entre deux feuilles rigides. Cette façon de procéder impose une certaine distance entre les feuilles pour un écoulement rapide, et par conséquent une épaisseur significative de la couche préparée. Dans la pratique pour les feuilles de dimensions importantes comme celles constituant des portes, une épaisseur de 3 à 4mm est le minimum que l'on puisse mettre en oeuvre de façon satisfaisante. En pratique des épaisseurs allant jusqu'à 6mm ou plus sont usuelles.

A l'inverse dans les techniques selon l'invention, comme indiqué précédemment, pour que le séchage soit aussi rapide que possible il est préférable de minimiser l'épaisseur des couches au moment du séchage. Même si selon l'invention l'élimination d'eau au cours du séchage est limitée, il reste que pour éviter de rallonger la durée du séchage, les épaisseurs des couches sont en règle générale sensiblement plus petites que celles des produits durcis sans séchage. En pratique, l'épaisseur des couches ne dépasse pas 3mm, et de préférence reste inférieure à 2mm. Comme nous le verrons plus loin, dans la mise en oeuvre des couches les plus minces, la technique selon l'invention offre des avantages significatifs.

Par ailleurs les compositions élémentaires, ne suffisent pas à rendre compte des différences observées entre les produits antérieurs et ceux selon l'invention. Les résultats pour beaucoup ne sont pas prévisibles sur la base seule de ces compositions.

En pratique, quelles qu'en soient les raisons, les inventeurs ont ainsi constaté que la stabilité au vieillissement des couches intumescentes est améliorée par la formation de la composition de départ, par addition de silice à une solution de silicate alcalin. Même lorsque le produit intumescent final présente des ratios SiO₂/K₂O inférieurs à 4, et que les constituants sont présents dans les proportions adéquates dans des solutions de silicates commerciales (sans ajout de silice), selon l'invention, l'ajout de silice améliore la stabilité au vieillissement. Il semble que l'addition de cette silice réduit les risques de "nucléation" génératrice de voile.

Sans que l'analyse structurelle des produits ait été entreprise de manière systématique, les différences de propriétés constatées semblent traduire des différences sensibles entre les couches formées. Ces différences sont probablement dans la nature chimique des constituants en présence et dans leur mode de réaction et de croissance.

Il apparaît également que la constitution des chaînes silicatées est sensible à la façon dont la composition de départ est préparée. Il n'est pas indifférent de procéder en ajoutant progressivement la silice. Les réactions, et leur développement sont commandés différemment selon les proportions respectives des réactifs en présence. De la même manière la nature des couches préparées peut être influencée par les caractéristiques des silices colloïdales ajoutées. Leur réactivité semble effectivement dépendante des dimensions des particules. Des essais effectués avec des suspensions de silice dont les dimensions moyennes sont respectivement de l'ordre de 7 et 15 nanomètres ne conduisent pas à des résultats équivalents. Les particules les plus petites étant plus nombreuses à masse égale leur réactivité est plus grande et les structures en conséquence sont avec des chaînes plus courtes. Pour la réalisation de l'invention il semble préférable que la "réaction" ne soit pas trop rapide. En conséquence des particules trop petites ne sont pas avantageuses.

Les considérations précédentes ne lient pas les inventeurs. Elles sont pour beaucoup encore en cours de vérification. L'important est de constater leur incidence sur les propriétés des produits obtenus.

Il est encore possible selon l'invention de procéder à la préparation des compositions à partir de produits chimiques, autrement dit sans avoir recours à des produits industriellement disponibles. On peut ainsi s'affranchir des contraintes liées à ces produits. Il est également possible de combiner systématiquement l'utilisation de produits industriels avec des produits chimiques. L'usage de produits "purs" présente l'avantage supplémentaire de prévenir l'apparition de défauts dont l'origine n'est pas parfaitement identifiée, mais dont la présence est manifestement attachée aux produits comportant certaines impuretés. La présence de ces impuretés peut par exemple se traduire par l'apparition de « haze» (trouble) au vieillissement, trouble qui n'apparaît pas avec des produits similaires obtenus à partir de composés chimiques.

Les exemples suivants illustrent l'invention, l'exemple 1 étant établi à titre comparatif. Exemple 1.

Dans cet essai on prépare une solution de silicate de potassium à partir de deux solutions disponibles dans le commerce.

La première solution comprend en poids:

| | |
|---|---|
| silice | 20,9% ; |
| oxyde de potassium | 8,1%; |
| eau | 71%. |

La seconde solution comprend en poids:

| | |
|---|---|
| silice | 23,9%; |
| oxyde de potassium | 10,9%; |
| eau | 65,3%. |

On mélange 170g de la première solution et 100g de la seconde. Dans la solution ainsi constituée, la teneur en eau est de 68,9% et le rapport molaire apparent SiO₂/K₂O est de 3,8. Cette solution est coulée sur une feuille de verre bordée par un cordon d'étanchéité maintenant la solution.. L'épaisseur de solution est de 6mm. La solution est séchée pendant 16 heures à 80°C, ramenant la teneur en eau dans la couche séchée à 46%.

Après séchage les bords sont découpés, et le produit obtenu est revêtu et assemblé de façon traditionnelle avec une deuxième feuille de verre recouvrant la couche séchée. Un cordon à base de silicone est disposé sur les bords pour protéger la couche séchée de l'atmosphère ambiante.

Le vitrage final bien transparent est soumis à un test de vieillissement accéléré dans une étuve portée à 80°C. Après quatre jours le produit présente un aspect blanchâtre.

La formation de ce "voile" aussi rapidement ne permet pas l'utilisation d'un tel produit. Exemple 2.

Comme précédemment on forme une solution de silicate de potassium destinée à être séchée. Cette solution est préparée en ajoutant cette fois de la silice colloïdale.

La solution de silicate de potassium initiale contient:

| | |
|---|---|
| silice | 29,0%; |
| oxyde de potassium | 8,1%; |
| oxyde de sodium | 0,3% |
| eau | 39,7%. |

La dispersion de silice commercialisée sous le nom de "Ludox" comprend:

| | |
|---|---|
| silice | 30,0%; |
| oxyde de sodium | 0,2%; |
| eau | 68,9%. |

A 61,8g de la solution de silicate, on ajoute 100g de la dispersion de silice. La teneur en eau est ajustée pour correspondre à celle de l'exemple 1 comparatif. Dans la solution obtenue, le rapport molaire apparent SiO₂/ M₂O est comme précédemment égal à 3,8.

Le séchage pour atteindre une couche comprenant 46% d'eau se poursuit pendant 14 heures dans les mêmes conditions qu'à l'exemple 1. Le produit séché est assemblé avec une deuxième feuille de verre, et est soumis à la même épreuve de vieillissement accéléré à 80°C.

Dans ces conditions, contrairement au résultat de l'essai précédent, le produit reste sans trouble après 21 jours.

Il est remarquable que partant de deux produits présentant les mêmes compositions (apparentes) élémentaires en silice, oxyde de potassium et même teneur en eau, des différences sensibles sont constatées, selon que l'on ajoute ou non une certaine quantité de silice sous forme de dispersion de silice colloïdale à une solution de silicate dans la préparation soumise à séchage.

Le cheminement conduisant aux couches des exemples précédents est reproduit sur le diagramme ternaire de la figure 1. Dans le premier cas la solution de base, représentée au point (A), est constituée à partir de solutions de silicate de potassium. Dans le second cas, une solution apparemment analogue est obtenue à partir d'une solution de silicate de potassium à laquelle on ajoute une dispersion colloïdale de silice, initialement pratiquement dépourvue d'alcalins (B). Dans les deux cas la solution coulée est séchée pour aboutir au produit (C).

### Exemple 3.

Dans cet exemple la préparation de la composition est faite de telle sorte que la teneur en eau initiale soit moindre que dans les exemples précédents.

La base de la composition est la solution de silicate et la dispersion de silice utilisées dans l'exemple 2. Il n'y a pas d'ajout d'eau contrairement à l'exemple 2. La teneur en eau de la composition est alors de 58,5%. Le rapport molaire apparent SiO₂/M₂O est inchangé. Il est de 3,8.

Le séchage dans les même conditions que précédemment pour parvenir à une couche conservant également 46% d'eau est obtenu cette fois en 7 heures. Autrement dit le fait de partir d'une composition moins riche en eau, permet dans ce cas de réduire de moitié au moins le temps de séchage.

A noter que la composition avant séchage reste stable suffisamment longtemps pour pouvoir être préparée et mise en oeuvre.

Comme précédemment, l'essai de vieillissement accéléré, après 21 jours, ne laisse apparaître aucun voile. Le produit reste parfaitement transparent.

### Exemple 4.

On prépare une solution dont le rapport molaire apparent silice/alcalin est plus élevé que précédemment. Les composants initiaux sont les mêmes que ceux de l'exemple 2 et de l'exemple 3.

La composition est constituée avec 46,2g de la solution de silicate et de 100g de la dispersion aqueuse de silice colloïdale. Cette composition renferme 60,3% d'eau, et le rapport molaire apparent s'établit à 4,6.

Le séchage d'une couche de 6mm de cette composition aboutissant à un produit renfermant encore 46% d'eau, est réalisé en 8 heures.

L'accroissement du caractère réfractaire de la couche séchée, ne modifie pas sa résistance au vieillissement. Après 21 jours à 80°C, le produit ne présente aucun voile.

### Exemple 5.

Dans les exemples précédents la proportion de silice ajoutée sous forme de dispersion colloïdale reste limitée pour la raison que l'addition supplémentaire à des solutions de silicate alcalins commerciaux, dont le rapport molaire est supérieur à 2, conduit à des mélange dont la viscosité est excessive et qui durcissent très vite.

Pour accroître la proportion de silice colloïdale dans la composition à sécher, les inventeurs ont constitué des solutions de silicate dans lesquelles le rapport SiO₂/M₂O est moindre.

Pour la formation de ces solutions de silicates à faible rapport molaire, il est préférable de partir des solutions de silicates commerciaux dont le rapport molaire est déjà relativement bas. Comme indiqué, il s'agit pour le silicate de potassium, de solutions dans lesquelles le rapport initial est de l'ordre de 2,09 et la teneur en eau de l'ordre de 60,5%. La formation de la solution à rapport molaire plus faible est réalisée par adjonction d'une solution de d'hydroxyde de potassium. La solution d'hydroxyde de potassium est de préférence relativement concentrée de l'ordre de 50%.

Le mélange de solution de silicate à forte teneur en eau et de la solution d'hydroxyde de potassium, donne une composition à teneur en eau élevée. Il est possible de réduire un peu cette teneur sans accroître de manière excessive la viscosité du mélange, par exemple par évaporation partielle sous vide.

Le faible rapport molaire SiO₂/M₂O permet d'accroître la proportion de matière sèche dans la solution de silicate initiale sans dépasser les limites de viscosité qui rendrait leur manipulation ultérieure difficile.

Des solutions ont été préparées ainsi avec des rapports molaires aussi bas que 1,3 avec une teneur en matière sèche atteignant 60%. Des teneurs plus fortes en matière sèche, par exemple de 65% sont aussi accessible avec un rapport molaire de 1,37. Les viscosités pour ces teneurs en matière sèche (65%) sont de l'ordre de 6000 à 10000 mPa.s.

Les solutions de silicate sont ensuite complétées par l'apport de silice colloïdale en proportion élevée. Elles sont ensuite coulées et soumises à séchage comme précédemment.

Dans toutes les préparations des compositions selon l'invention, en procédant au mélange des solutions de silicate de potassium et des suspensions de silice colloïdale, il faut éviter la présence de bulles qui peuvent se former en particulier au cours de l'agitation du mélange. Il faut aussi prendre soin d'éviter la présence de particules agglomérées qui ne seraient pas résorbées au stade suivant de séchage ou d'étuvage des vitrages assemblés. Pour cela, si nécessaire, les compositions sont filtrées avant d'être coulées sur la feuille de verre et séchées.

Le séchage en étuve des feuilles de verre revêtues d'une couche de composition de silicate de potassium est relativement rapide. Mais le séchage peut être effectué également en continu. Le principe de ce séchage est de déposer la composition de manière continue sur un support constitué d'un tapis de matériau synthétique souple et imperméable lequel est passé dans un four pendant un temps encore plus court. Le passage dans le four est d'environ 1 heure à 110°C. Pour atteindre les niveaux de séchage recherchés, compte tenu de la brièveté de cette opération, l'épaisseur des couches produites ne dépasse pas normalement 1,5mm. La couche de matériau intumescent est séparée de son support après séchage. Pour lui conférer toute la plasticité nécessaire il est préférable que la composition renferme des polyols et/ou les additifs tels que TEOS ou MTEOS. Compte tenu de la présence de ces composés organiques, il est avantageux de renforcer le caractère réfractaire de ces compositions en choisissant un rapport apparent Si/alcalin relativement élevé.

Un vitrage est constitué comme il vient d'être dit avec deux feuilles de verre "float" traditionnel, chacune de 3mm d'épaisseur, et une couche intumescente à base de silicate de potassium de 1,5mm d'épaisseur obtenue par séchage, couche dont la teneur en eau est 46% et le rapport molaire apparent SiO₂/M₂O de 3,8. Ce vitrage est soumis à l'épreuve au feu suivant la norme ISO 834. Le vitrage ainsi constitué présente une résistance de plus de 30mn.

Bien entendu les assemblages réalisés à partir des couches intumescentes préparées selon les modalités de l'invention ne se limitent pas à cette combinaison. Des assemblages variés comportant plusieurs couches intumescentes associées à plusieurs feuilles de verre permettent d'accroître les propriétés de résistance au feu. La commodité de préparation présente dans tous les cas un avantage certain dans la préparation des produits en question.

En premier il est possible de former des couches intumescentes plus épaisses tout en conservant un temps de séchage acceptable.

La formation de couches plus épaisses est avantageuse en ce sens qu'elle permet de réaliser des vitrages plus légers que précédemment. Les figures 2 et 3 illustrent cet avantage.

La figure 2 représente un vitrage antérieur formé au moyen de couches intumescentes qui nécessitent un séchage très poussé conduisant par exemple à une teneur résiduelle en eau de l'ordre de 20 à 25%. Dans cet exemple une tenue au feu déterminée correspond en première approximation à une épaisseur donnée de matériau intumescent. Si l'épaisseur nécessaire est de plusieurs millimètres il devient pratiquement impossible de procéder à la formation d'une seule couche correspondant à cette épaisseur. La solution adoptée habituellement est alors de multiplier le nombre des couches de faible épaisseur jusqu'à obtenir l'épaisseur nécessaire. La figure 2 présente ainsi un vitrage formé de deux couches intumescentes (1 et 2) et de trois feuilles de verre (3, 4, 5).

La préparation d'un tel vitrage tend à limiter le nombre des éléments différents utilisés pour la commodité de production industrielle. Dans le cas envisagé le vitrage est constitué de deux feuilles de verre (3, 4) revêtues chacune d'une couche intumescente (1, 2). L'assemblage est conduit de manière traditionnelle et comporte une troisième feuille de verre (5) pour couvrir la couche intumescente (2).

La figure 3 illustre ce que l'on peut substituer à l'exemple précédent lorsqu'une couche intumescente d'épaisseur égale à l'ensemble des deux couches précédentes peut être directement obtenue. Dans ce cas avec une couche qui ne nécessite qu'un séchage limité aboutissant par exemple à une teneur en eau de l'ordre de 46%, il est possible de former une couche beaucoup plus épaisse sans que le temps de séchage soit prohibitif. Avec cette couche l'épaisseur nécessaire est atteinte et le vitrage peut être constitué avec une feuille de verre (6) revêtue de la couche épaisse intumescente (7) unique laquelle est recouverte et assemblée de façon traditionnelle (par étuvage sous pression par exemple, ou par calandrage) d'une feuille de verre (8).

Cette façon de procéder conduit ainsi à alléger les vitrages sans réduire sensiblement leur résistance au feu.

L'épaisseur des feuilles de produits intumescents peut encore être accrue en procédant suivant un mode déjà utilisé antérieurement et qui consiste comme présenté à la figure 4, à accoler feuille intumescente contre feuille intumescente deux feuilles de verre préalablement revêtues des couches intumescentes en question. La standardisation conduit souvent à assembler dans ce cas deux feuilles de verre (9, 10) revêtues de couches identiques (11, 12).

Sur la figure 4 les deux feuilles de matériau intumescent sont distinguées par le trait pointillé. Dans la pratique si la constitution d'un assemblage de cette nature peut apparaître à une analyse très précise, la quasi-totalité des propriétés fait de ces couches accolées l'équivalent d'une seule et même couche.

## Revendications

1. Procédé de préparation d'une couche de matériau intumescent pour vitrage anti-feu à base de silicate alcalin hydraté, comprenant la formation d'une composition à partir de solutions de silicates alcalins, procédé comprenant l'addition de dispersions aqueuses de silice colloïdale, la silice colloïdale représentant au moins 20% de la silice totale, le potassium vis-à-vis du sodium étant dans un rapport atomique supérieur à 4/1, avec un rapport molaire apparent SiO₂/M₂O (M étant un alcalin) supérieur à 3,5 et inférieur à 10, la composition étant étalée en couche sur un support plan, et étant soumise à un séchage ramenant leur teneur en eau apparente à une valeur ne dépassant pas 55%.

2. Procédé selon la revendication 1 dans lequel la teneur en eau apparente après séchage est comprise entre 40 et 48%.

3. Procédé selon l'une des revendications précédentes dans lequel le rapport K/Na est supérieur à 10/1.

4. Procédé selon l'une des revendications précédentes dans lequel le rapport apparent SiO₂/M₂O est compris entre 3,5 et 6.

5. Procédé selon la revendication 4 dans lequel le rapport apparent SiO₂/M₂O est compris entre 4 et 6,0.

6. Procédé selon l'une des revendications précédentes dans lequel l'apport de silice par addition de silice colloïdale représente au moins 30% de la silice totale.

7. Procédé selon l'une des revendications précédentes, la composition comprenant également un composé polyol dont la teneur pondérale après séchage n'excède pas 10%.

8. Procédé selon l'une des revendications précédentes, la composition comprenant en outre un des composés TEOS et/ou MTEOS, dont la teneur pondérale après séchage ne dépasse pas 3%.

9. Procédé selon l'une des revendications précédentes, la composition comprenant en plus un ou plusieurs composés aminés, dont la teneur pondérale après séchage ne dépasse pas 2%.

10. Procédé selon l'une des revendications précédentes, la composition comprenant en plus un ou plusieurs agents tensioactifs en quantité efficace pour que la composition mouille le substrat sur lequel elle est appliquée pour séchage.

11. Procédé selon l'une des revendications précédentes dans lequel les constituants de la composition sont préparés en solution par mélange d'une ou plusieurs solutions de silicates alcalins avec une suspension aqueuse de silice colloïdale et addition des différents additifs, la composition étant appliquée liquide sur un support plan, et soumise à un séchage dans une atmosphère contrôlée en nature, température et hygrométrie, jusqu'à obtention de la teneur en eau finale recherchée.

12. Procédé selon la revendication 11 dans lequel la composition est filtrée avant d'être appliquée sur le support.

13. Procédé selon la revendication 11 ou la revendication 12 dans lequel la solution de silicate utilisée pour la formation de la composition, est elle-même préparée à partir d'une solution de silicate dont le rapport molaire SiO₂/M₂O est au plus de 2, avec addition de solution d'hydroxyde de potassium.

14. Procédé selon l'une des revendications 10 à 13, dans lequel la solution est versée sur une feuille de verre horizontale laquelle est introduite dans une étuve pour procéder au séchage.

15. Procédé selon l'une des revendications 11 à 13, dans lequel la solution est versée de manière continue sur un support défilant de façon continue en traversant une étuve tunnel dans laquelle le séchage est effectué.

## Patentansprüche

1. Verfahren zur Herstellung einer Schicht aus einem anschwellenden Material für eine Brandschutzverglasung auf der Basis eines hydratisierten alkalischen Silikats, umfassend die Bildung einer Zusammensetzung aus Lösungen alkalischer Silikate, wobei das Verfahren den Zusatz wässriger Dispersionen von kolloidalem Siliciumdioxid umfasst, wobei das kolloidale Siliciumdioxid mindestens 20 % des gesamten Siliciumdioxids darstellt, wobei Kalium zu Natrium in einem Atomverhältnis von mehr als 4/1 steht, mit einem offensichtlichen Molverhältnis SiO₂/M₂O (wobei M ein Alkali ist) von größer als 3,5 und kleiner als 10, wobei die Zusammensetzung in einer Schicht auf einem ebenen Träger aufgebracht wird und einer Trocknung unterzogen wird, die den offensichtlichen Wassergehalt auf einen Wert zurückführt, der 55 % nicht überschreitet.

2. Verfahren nach Anspruch 1, wobei der offensichtliche Wassergehalt nach der Trocknung zwischen 40 und 48 % beträgt.

3. Verfahren nach einem der vorhergehenden Ansprüche, wobei das Verhältnis K/Na größer als 10/1 ist.

4. Verfahren nach einem der vorhergehenden Ansprüche, wobei das offensichtliche Verhältnis Si02/M20 zwischen 3,5 und 6 beträgt.

5. Verfahren nach Anspruch 4, wobei das offensichtliche Verhältnis Si02/M20 zwischen 4 und 6,0 beträgt.

6. Verfahren nach einem der vorhergehenden Ansprüche, wobei die Zufuhr von Siliciumdioxid durch den Zusatz von kolloidalem Siliciumdioxid mindestens 30 % des gesamten Siliciumdioxids darstellt.

7. Verfahren nach einem der vorhergehenden Ansprüche, wobei die Zusammensetzung auch eine Polyolverbindung umfasst, deren Gewichtsgehalt nach der Trocknung 10 % nicht überschreitet.

8. Verfahren nach einem der vorhergehenden Ansprüche, wobei die Zusammensetzung außerdem eine der Verbindungen TEOS und/oder MTEOS umfasst, deren Gewichtsgehalt nach der Trocknung 3 % nicht überschreitet.

9. Verfahren nach einem der vorhergehenden Ansprüche, wobei die Zusammensetzung außerdem eine oder mehrere Aminverbindungen umfasst, deren Gewichtsgehalt nach der Trocknung 2 % nicht überschreitet.

10. Verfahren nach einem der vorhergehenden Ansprüche, wobei die Zusammensetzung außerdem einen oder mehrere grenzflächenaktive Stoffe in einer wirksamen Menge umfasst, damit die Zusammensetzung das Substrat benetzt, auf dem sie zur Trocknung aufgebracht wird.

11. Verfahren nach einem der vorhergehenden Ansprüche, wobei die Bestandteile der Zusammensetzung in Lösung durch Mischen einer oder mehrerer Lösungen alkalischer Silikate mit einer wässrigen Suspension von kolloidalem Siliciumdioxid und den Zusatz verschiedener Additive hergestellt werden, wobei die Zusammensetzung flüssig auf einen ebenen Träger aufgebracht wird und einer Trocknung in einer natürlichen gesteuerten Atmosphäre, Temperatur und Feuchtigkeit unterworfen wird, bis der gesuchte Endwassergehalt erhalten wird.

12. Verfahren nach Anspruch 11, wobei die Zusammensetzung filtriert wird, bevor sie auf den Träger aufgebracht wird.

13. Verfahren nach Anspruch 11 oder Anspruch 12, wobei die Silikat-Lösung, die zur Bildung der Zusammensetzung verwendet wird, selbst aus einer Silikat-Lösung hergestellt wird, deren Molverhältnis Si02/M20 höchstens 2 beträgt, mit dem Zusatz einer Kaliumhydroxidlösung.

14. Verfahren nach einem der Ansprüche 10 bis 13, wobei die Lösung auf eine horizontale Glasscheibe gegossen wird, die in einen Trockenofen eingeführt wird, um die Trocknung durchzuführen.

15. Verfahren nach einem der Ansprüche 11 bis 13, wobei die Lösung kontinuierlich auf einen Träger gegossen wird, der sich kontinuierlich fortbewegt, indem er einen Tunneltrockenofen durchquert, in dem die Trocknung durchgeführt wird.

## Claims

1. Process for the preparation of a layer of intumescent material for a fire-resistant glazing based on hydrated alkali metal silicate, comprising the formation of a composition from solutions of alkali metal silicates, which process comprises the addition of aqueous dispersions of colloidal silica, the colloidal silica representing at least 20% of the total silica, the potassium with regard to the sodium being in an atomic ratio of greater than 4/1, with an apparent SiO₂/M₂O (M being an alkali metal) molar ratio of greater than 3.5 and less than 10, the composition being spread as a layer over a flat support and being subjected to a drying which brings its apparent water content to a value not exceeding 55%.

2. Process according to Claim 1, in which the apparent water content after drying is between 40% and 48%.

3. Process according to either of the preceding claims, in which the K/Na ratio is greater than 10/1.

4. Process according to one of the preceding claims, in which the apparent SiO₂/M₂O ratio is between 3.5 and 6.

5. Process according to Claim 4, in which the apparent SiO₂/M₂O ratio is between 4 and 6.0.

6. Process according to one of the preceding claims, in which the contribution of silica by addition of colloidal silica represents at least 30% of the total silica.

7. Process according to one of the preceding claims, the composition also comprising a polyol compound, the content by weight of which after drying does not exceed 10%.

8. Process according to one of the preceding claims, the composition additionally comprising one of the compounds TEOS and/or MTEOS, the content by weight of which after drying does not exceed 3%.

9. Process according to one of the preceding claims, the composition additionally comprising one or more amine compounds, the content by weight of which after drying does not exceed 2%.

10. Process according to one of the preceding claims, the composition additionally comprising one or more surface-active agents in an amount effective for the composition to wet the substrate on which it is applied for drying.

11. Process according to one of the preceding claims, in which the constituents of the composition are prepared in solution by mixing one or more solutions of alkali metal silicates with an aqueous suspension of colloidal silica and addition of the various additives, the composition being applied liquid to a flat support and subjected to a drying in an atmosphere controlled in nature, temperature and hygrometry, until the final desired water content is obtained.

12. Process according to Claim 11, in which the composition is filtered before being applied to the support.

13. Process according to Claim 11 or Claim 12, in which the silicate solution used for the formation of the composition is itself prepared from a silicate solution, the SiO₂/M₂O molar ratio of which is at most 2, with addition of potassium hydroxide solution.

14. Process according to one of Claims 10 to 13, in which the solution is poured onto a horizontal glass sheet which is introduced into an oven in order to carry out the drying.

15. Process according to one of Claims 11 to 13, in which the solution is poured continuously onto a support which is continuously progressing forward while passing through a tunnel oven in which the drying is carried out.
